# EUROPÄISCHE PATENTSCHRIFT

(11) **EP 1 094 930 B1**
(45) Veröffentlichungstag und Bekanntmachung des Hinweises auf die Patenterteilung: **01.10.2003**
(21) Anmeldenummer: 99934672.9
(22) Anmeldetag: 13.07.1999
(51) Int. Cl.: B29D 30/72

(54) **VERFAHREN ZUR HERSTELLUNG EINES LUFTREIFENS**
METHOD FOR PRODUCING A TYRE
PROCEDE DE FABRICATION D'UN PNEU

(30) Priorität: 15.07.1998 DE 19831747
(43) Veröffentlichungstag der Anmeldung: 02.05.2001
(73) Patentinhaber: Continental Aktiengesellschaft, 30165 Hannover (DE)
(72) Erfinder: BLICKWEDEL, Holger, D-30625 Hannover (DE); SERGEL, Horst, D-30657 Hannover (DE)
(74) Vertreter: Schneider, Egon
(86) Internationale Anmeldenummer: EP9904895
(87) Internationale Veröffentlichungsnummer: WO00003867

(56) Entgegenhaltungen:
- US-A- 3 223 572
- US-A- 4 006 766
- US-A- 4 240 863
- US-A- 4 279 683
- US-A- 4 552 521
- DATABASE WPI Section Ch, Week 199749 Derwent Publications Ltd., London, GB; Class A35, AN 1997-531516 XP002119646 -& JP 09 254274 A (BRIDGESTONE CORP), 30. September 1997 (1997-09-30)

## Beschreibung

Die Erfindung betrifft ein Verfahren zur Herstellung eines Reifens, insbesondere zur Herstellung eines Luftreifens für Kraftfahrzeuge, wobei das Verfahren einen schrittweisen Aufbau des Reifens mit einer möglichst weitgehend luftundurchlässigen Schicht, zumindest einer Karkassenlage, Homprofilen, Wulstkernen, Seitenwänden sowie mit einem aus Gürtelverband, ggf. einer ein- oder mehrteiligen Gürtelbandage und einer Laufstreifenunterplatte bestehenden Gürtelpaket umfasst, wobei das Seitenwandgummi als extrudierter Gummistreifen in Form einer Spirale mit mehreren nebeneinander-liegenden oder sich mindestens teilweise überlappenden Windungen auf die Seitenwände der Karkasse aufgespult wird.

Die Seitenwände eines Reifens entstehen in ihrem Aufbau beim klassischen Herstellungsverfahren eines Reifens bereits auf der Karkassaufbautrommel. Hierbei werden vor oder nach Auflegen der Kerne und der Kernprofile die seitlich überstehenden Gummilagen zur Mitte hin zurückgeschlagen und bilden dann den Rohling der ersten Aufbaustufe. In diesem Schritt wird bereits das Seitenwandgummi aufgelegt bzw. "eingebaut".

Bei der nachfolgenden Bombierung des zylinderförmigen Rohlings zum torusförmigen Reifenkörper muss berücksichtigt werden, dass sich durch den Expansionsvorgang bei der Bombierung die Geometrie der Karkasse verändern und auch die Volumina der Gummiauflagen, d. h. also auch die der Seitenwandgummiteile verlagern können, so daß bereits im Vorfeld eine diesbezügliche und empirisch zu ermittelnde Einstellung zur Kompensation vorgenommen werden muss. Auch während der nach Auflage des Gürtelpaketes erfolgenden Vulkanisation, bei der komplettierte Rohling über einen Balg mit Innendruck beaufschlagt und unter erhöhte Temperatur gesetzt wird und dann seine sogenannte "Resterhebung", d.h. eine zusätzliche Aufweitung zur Einformung in die Vulkanisationsform, erhält, lässt sich eine weitere Verschiebung beobachten, die ebenfalls durch bereits vorherige Anpassung des gesamten Fertigungsprozesses kompensiert werden muss. Eine solche Kompensation birgt damit in sich die Nachteile, dass etwa in den besonders der Ausdehnung unterworfenen Bereichen, wie z. B. in den Seitenwänden, eine genaue Dosierung der Gummivolumina und eine exakte Formgebung schwierig sind.

Der Begriff "Gürtelpaket" als üblicher Fachausdruck in der Reifenfertigung beinhaltet hierbei nicht nur den Gürtel, d.h. die Gürtellagen als solche, sondern auch die weiteren den Reifenrohling vervollständigenden Bauteile oberhalb des Gürtels, nämlich den Laufstreifen und gegebenenfalls vorhandene Gürtelbandagen, Einlagen und Laufstreifenunterplatten. Dies resultiert aus der im klassischen Zweistufenverfahren üblichen Herstellungsweise, bei der diese Bauteile auf der Gürtelaufbautrommel zu einem ringförmigen "Paket" zusammengestellt werden, in welches dann der auf einer separaten Karkasseaufbautrommel hergestellte Karkasserohling - das Karkassepaket - unter Aufweitung (Bombierung) eingepresst wird.

Ein Verfahren der eingangs genannten Art ist aus der US 4,279,683 bekannt.

Bei der Runderneuerung sind Verfahren bekannt, bei denen nach einem entsprechenden Vorbereiten und Abbürsten der Oberflächen des Altreifens, d.h. des bereits konturierten Reifens durch Kalt- oder Warmverfahren auch ein neues Seitenwandgummi aufgebracht werden kann. Im Gegensatz zum Aufbringen des Laufstreifens, der auf eine etwa zylindrische Oberfläche gelegt werden kann, besteht bei den in Streifenform aufgelegten Seitenwänden nicht allein der Nachteil, dass ein gerader Streifen Seitenwandgummi auf einer stark konvexen, d. h. nach außen gewölbten Seitenwandoberfläche aufgebracht werden muss, sondern es besteht auch das Problem, dass der Seitenwandgummistreifen quer zu seiner Längsrichtung zu einem scheibenförmigen Gebilde geformt wird, was im Streifenmaterial durch die dann entstehenden unterschiedlichen Radien starke Stauchungen oder Dehnungen hervorruft.

Auch hierzu muss im Sinne einer vorherigen Kompensation der Seitenwandgummistreifen mit einem trapezförmigen oder dreieckigen Querschnitt konzipiert werden, damit auch nach den entsprechenden Dehnungen eine annähernd gleiche Streifendicke auf der Seitenwand vorhanden bleibt.

Ein zusätzliches Problem besteht darin, dass der auf eine nach außen gewölbte Kreisringfläche aufgebrachte Seitenwandstreifen nach der Auflage durch einen Schnitt abgelängt werden muss, was dazu führt, dass die radial äußeren Bereiche, die einer wesentlich größeren Dehnung unterliegen als die radial inneren Bereiche, an der Schnittstelle zurückwandern, wodurch sich eine etwa dreieckige oder trapezförmige Öffnung des Streifens ergeben würde, wenn nicht bereits der Schnitt entsprechend geneigt oder überlappend gesetzt wird.

Jede Überlappung bewirkt aber eine zusätzliche Verdickung der Seitenwand an lediglich einer Stelle, die aus optischen, aber auch aus Gründen der Unwucht, unerwünscht ist. In aller Regel muss der Stoß deshalb nachgeschnitten werden, was wiederum den Produktionsprozeß, bzw. den Prozess der Rundemeuerung störend beeinflusst.

Eine Lösung dieses Problems zeigt das deutsche Gebrauchsmuster DE 29 612 955 U1, das eine Vorrichtung offenbart, mit der die Seitenwände über speziell geformte und an den vorbereiteten Flächen anliegende Extruderschuhe angespritzt, bzw. extrudiert werden können. Eine solche Lösung sichert u. a. durch die spezielle Gestaltung und das Flachdrücken der Seitenwände der Karkasse einen gleichmäßigen Gummiauftrag, beinhaltet jedoch den Nachteil, dass zum einen für jede Reifengröße ein spezieller Schuh vorgesehen sein muss und zum anderen eine variable Gestaltung der Dicke nur durch die Beeinflussung der Extruderdüse oder des Geschwindigkeitsprofiles oder auch eine Änderung der Gummimischung über die Reifenhöhe nicht durchführbar ist. Beim Runderneuern birgt das Flachdrücken der Seitenwände in sich auch noch den Nachteil, dass durch im Reifen bereits vorhandene Steifigkeitssprünge in den Seitenwänden, also etwa durch Überlappungen aus dem ursprünglichen Herstellungsprozess, die aufgebrachte Schichtdicke beeinflusst werden kann.

Die EP 264600 B1 offenbart ein Verfahren zur Herstellung von (Neu-)Reifen, bei dem sämtliche Gummiteile des Reifens mit Hilfe eines oder mehrerer in mehreren Achsen beweglichen volumetrischen Extruders aufgebracht werden. Hierbei wird eine Reifenaufbautrommel verwendet, die im wesentlichen bereits an die spätere Reifenkontur angepasst und mit einer einem fertigen Reifen weitgehend angenäherten Form der Seitenwände, Laufflächen, Wulstbereiche etc. ausgebildet ist.

Auf diese rotierende Aufbautrommel, die in aller Regel aus Aluminium besteht, werden dann sämtliche Gummiteile, d. h. Laufstreifen, Seitenwände, Wülste etc. aufgespritzt. Danach dient die Trommel als Halteelement zur Stabilisierung der Form des noch nicht vulkanisierten Reifens während der Übergabe zur und in der Vulkanisationspresse. Dies hat zur Folge, dass die Aluminiumtrommel mit dem Gummi aus der Wickelposition entnommen wird und in eine speziell angepasste Vulkanisationspresse gelegt wird, in der eine weitere Außenform Aufbautrommel und Reifen umschließt und den Reifen vollständig vulkanisiert.

Bei diesem Verfahren besteht der Nachteil, dass zu jedem Vulkanisationsvorgang die Reifenaufbautrommel mit transportiert werden muss, eine genaue und verstellbare weitere und an den Produktionsprozeß angepasste Außenform hergestellt werden muss und letztlich der Aluminiumkern, d. h. die Aufbautrommel so ausgebildet sein muss, dass sie nach der Vulkanisation wieder aus dem Reifen zu entnehmen ist und neu innerhalb der Wickelstation aufgebaut werden kann, so dass der Vorteil der sehr variablen und präzisen Aufbringung des Gummis an allen Reifenbereichen durch gravierende Änderungen im Hinblick auf den klassischen Herstellungs- und Vulkanisierungsprozeß erkauft werden muss.

Für die Erfindung bestand daher die Aufgabe, ein Verfahren zur Herstellung von Reifen bereitzustellen, bei dem insbesondere die Seitenwandgummiteile ohne größere Dehnungen am Außenradius aufgebracht werden können, bei dem ein Schneiden der Seitenwandgummiteile in der genannten Art und auch eine Verdickung aufgrund von Überlappungen vollständig entfällt, bei dem der herkömmliche Herstellungsprozeß mindestens im Hinblick auf Vulkanisationsverfahren und -einrichtungen erhalten bleiben kann, bei dem eine für alle Abmessungen ohne großen Vorrat von Spezialwerkzeugen durchführbare Produktionsweise zugrunde gelegt wird und welches im übrigen kostengünstig und materialsparend für alle Abmessungsbereiche und Reifentypen nutzbar wird.

Gelöst wird diese Aufgabe durch die Merkmale des Hauptanspruchs. Hierbei wird das Seitenwandgummi des Reifens als extrudlerter Gummistreifen in Form einer Spirale mit mehreren nebeneinanderliegenden oder sich mindestens teilweise überlappenden Windungen auf die Seitenwände einer bei bereits und bombierten und gegebenenfalls mit mindestens Teilen des Gürtelpaketes versehenen Karkasse aufgespult.

Durch das Aufbringen auf eine bereits bombierte Karkasse verhindert man das Einbringen von größeren Verformungen in die noch aufzulegenden weiteren - noch weichen oder "grünen" - Gummimaterialien, so dass die Seitenwand bzw. das Seitenwandgummi ohne jegliche Vorspannungen und ohne Unstetigkeiten in der Kontur in beliebigen Schichtdicken aufgebracht werden kann. Zudem erübrigt sich die Notwendigkeit von Stütz- oder Formkörpern, die während des weiteren Verarbeitungsprozesses nur mit Schwierigkeiten handhabbar sind.

Durch das Aufbringen in Form einer Spirale mit mehreren nebeneinanderliegenden oder sich teilweise überlappenden Windungen lässt sich zudem durch einfache Steuerung des Vorschubs in bestimmten radialen Bereichen, so beispielsweise im Bereich des Apex oder "Fillers", eine Materialverdickung erreichen, die das Einlegen von weiteren zusätzlichen Streifen überflüssig werden lässt. Da die Karkassenkontur bereits bombiert ist, können durch diese Maßnahme ohne Berücksichtigung von Kompensationsvolumina auch gezielt Verdickungen im Flankenbereich der Reifen aufgebracht werden, die etwa als Kantenschutz oder zur Stabilisierung im Hinblick auf Reifeneigenschwingungen vorzusehen sind.

Auch kann das als exdrudierter Gummistreifen aufgespulte Seitennwandgummi bei einer bereits mit mindestens Teilen des Gürtelpaketes versehenen Karkasse so aufgebracht werden, dass die Schulterbereiche des Gürtelpaketes auf einfachste Weise mit überlappt oder überdeckt werden.

Eine solche Überdeckung oder Überlappung und die dadurch mögliche besonders sichere Verbindung der hochbelasteten Kanten- oder Schulterbereiche des Gürtelpaketes mit dem Seitenwandgummi ergibt sich in vorteilhafterweise insbesondere dann, wenn die Karkasse mit einem aus Gürtellagen, gegebenenfalls Gürtelbandagen und Laufstreifenunterplatte bestehendem Gürtelpaket versehen wird und der Laufstreifen auf dem Gürtelpaket vor dem oder während des Aufspulen(s) der Seitenwände aufgebracht wird.

Hierdurch lässt sich in den genannten belasteten Bereichen auf einfache Weise sogar eine schichtweise vezahnte Überlappung erzeugen, die nach der Vulkanisation eine regelrechte Verklammerung zwischen Seitenwand und Gürtelpaket bzw. Laufstreifen bereitstellt. So kann durch entsprechende Steuerung des aufgelegten extrudierten Seitenwand-Gummistreifens zunächst die Laufstreifenunterplatte in den Schulterbereichen übertappt werden, wonach der Laufstreifen aufgelegt wird, der dann nochmalig in seinen Schulterbereichen vom Seitenwand-Gummistreifen überdeckt wird.

Eine weitere vorteilhafte Ausführung des Verfahrens besteht darin, dass der Laufstreifen als extrudierter Gummistreifen entweder als ein im wesentlichen der Laufstreifenbreite entsprechender Einzelstreifen oder schraubenförmig mit nebeneinanderliegenden oder sich teilweise überlappenden Wicklungen auf die Umfangsfläche des Gürtelpaketes aufgespult wird. Auch hier läßt sich leicht eine Verzahnung oder Überlappung in den Schulterbereichen durchführen.

Während der Gummistreifen für das Seitenwandgummi hierbei im wesentlichen spiralförmig aufgespult wird, ergibt sich beim Aufspulen des Laufstreifens durch die annähernd gleichen Radien im oder auf dem Gürtelpaket ein Aufspulen etwa in Form einer Schraubenlinie. Neben den Vorteilen der Variation der Schichtdicken durch lediglich volumetrische Steuerung und Änderung des Vorschubs eines Extruders erreicht man durch ein solches Verfahren eine einheitliche Fertigungsmethode für Seitenstreifen und Laufstreifen und nähert sich einer weitgehenden Automatisierung ohne zwischengeschaltete Handarbeitsschritte.

Vorteilhafterweise wird zeitgleich mit dem Aufspulen des Seitenwandgummis der Laufstreifen aufgebracht und die Extrusionsgeschwindigkeit, Vorschub und das Extrusionsvolumen der Gummistreifen für die Seitenwände beim Aufspulen so gesteuert, dass die Taktzeiten für das Aufbringen der Seitenwände und des Laufstreifens annähernd gleich sind. Im klassischen Verfahren wird der Laufstreifen hierbei einstückig als ein etwa der Reifenbreite entsprechender Streifen aufgelegt.

Hierdurch ergibt sich eine vorteilhafte Einbindung des Aufspulens der Gummistreifen für die Seitenwände in den gesamten Produktionsprozess. Durch das synchrone Aufspulen werden die üblicherweise nacheinander folgenden Arbeitsgänge zeitlich zusammengefasst und die Taktzeit für die Herstellung eines Reifens verkürzt.

Eine weitere vorteilhafte Ausbildung des Verfahrens besteht darin, dass der Seitenwand- und der Laufstreifen durch Koextrusion mit einer einzigen Extrudiervorrichtung aufgebracht werden. Der Aufwand für einen hierzu geeigneten Extruder und für die Steuerung ist zwar größer als für einen Standadextruder, jedoch wird hierbei nur eine Extrudiervorrichtung benötigt, so dass sich im Hinblick auf die gesamte Anlage und die Vielzahl der nötigen üblichen Auflagestationen eine maschinentechnische Vereinfachung ergibt.

In einer weiteren vorteilhaften Ausführung wird das Seitenwandgummi des Reifens als extrudierter Gummistreifen in Form einer Spirale mit mehreren nebeneinanderliegenden oder sich mindestens teilweise überlappenden Windungen auf die Seitenwände einer bereits in ihrer endgültigen Kontur hergestellten und mindestens teilweise vulkanisierten Karkasse aufgespult und der Reifen nach Aufbringen des Laufstreifens ausvulkanisiert.

Durch das Aufbringen auf eine in aller Regel bereits vollständig vulkanisierte Karkasse, erübrigt sich die Notwendigkeit von Stütz- oder Formkörpern während des weiteren Verarbeitungsprozesses, da die Gummimatrix bereits verfestigt und die Verstärkungselemente innerhalb dieser fest eingebunden sind. Bei vollständiger Vorvulkanisation kann man dabei auf die Resterhebung im wesentlichen verzichten, so dass die Seitenwand bzw. das Seitenwandgummi ohne jegliche Vorspannungen und ohne Unstetigkeiten in der Kontur in beliebigen Schichtdicken aufgebracht werden kann.

Zur Vereinfachung und Standardisierung der verwendeten Extruder und insbesondere der Extruderdüsen ist das Verfahren vorteilhafterweise so ausgebildet, dass der durch die Extruderdüse vorbestimmte Austrittsquerschnitt des Gummistreifens durch ein oder mehrere Profilwalzensätze mit einem zum Austrittsquerschnitt unterschiedlichen Querschnitt geformt und über ein abrollendes Auflegerad auf die Seitenwände und/oder den Laufstreifenunterbau der Karkasse aufgespult werden. Die Profilwalzensätze lassen sich - jedenfalls im Vergleich zu einer Extruderdüse - leicht austauschen und können auf jeweilige Abmessungen und Mischungen der Gummistreifen angepasst werden.

Ein weiterer Vorteil insbesondere im Hinblick auf die durch besondere Gummimischungen mögliche Anpassung der Eigenschaften einzelner Bereiche des Reifens ergibt sich dadurch, dass der Laufstreifen und/oder der Seitenstreifen mit zwei oder mehreren extrudierten Gummistreifen unterschiedlicher Mischung sukzessive oder durch Koextrusion aufgespult werden.

Im Bereich des Laufstreifens lässt sich hierdurch beispielsweise die Leitfähigkeit oder auch das spätere Abriebverhalten beeinflussen, während beim Seitenstreifen unterschiedliche Materialhärten eingestellt werden können, die zur Versteifung oder auch in Form eines Kantenschutzes an beliebigen Stellen angeordnet sein können. Bei der Verwendung von Extruderdüsen, die einen etwas breiteren Gummistreifen erzeugen, ergeben sich Vorteile, wenn die gewölbte Kontur der Seitenwände der Karkasse zum und während des Aufspulens des Gummistreifens mindestens teilweise in eine einer im wesentlichen ebenen Scheibe entsprechenden Form flachgedrückt werden. Hierdurch lässt sich die Steuerung für den die Seitenwandgummiteile aufbringenden Extruder vereinfachen, indem mindestens eine zusätzliche Achsführung eingespart werden kann.

In einer Weiterbildung des Verfahrens wird der Laufstreifen durch Aufspulen zweier Gummistreifen mit unterschiedlichen Extrudem aufgebracht, wobei ein erster Extruder mit der Base-Mischung den Spulvorgang in einem Schulterbereich beginnt und ein zweiter Extruder mit der Cap-Mischung gegebenenfalls mit zur Mitte des Reifens versetztem Anfangsauflagepunkt nachläuft. Ein solches Verfahren vermeidet ein mehrmaliges Hin- und Herfahren eines Extruders und vereinfacht den Extruderaufbau, da die jeweiligen Extruderdüsen lediglich für eine Mischung und nicht etwa für Koextrusion und Umschaltung von Cap- auf Base-Mischung ausgelegt sein müssen.

In einer vorteilhaften Weiterbildung weist die Cap-Mischung für den Laufstreifen eine andere Leitfähigkeit für elektrostatische Ladungen auf als die Base-Mischung. Dabei wird nach dem Aufspulen der Cap-Mischung in den die während der nachfolgenden Vulkanisation eingebrachten Umfangsrillen enthaltenden Bereichen eine weitere dünne Lage der Base-Mischung aufgelegt. Hierdurch ergibt sich der Vorteil, dass bei der nachfolgenden Profilformung die durch ein komplementäres Profil in der Vulkanisationsform gefertigten Umfangsrillen mit der an diesen Stellen nochmals aufliegenden Base-Mischung eine Brücke zu der leitfähigen Base-Mischung des Laufstreifensunterbaus formen, so dass eine elektrostatische Leitfähigkeit stets gesichert bleibt.

Eine weitere vorteilhafte Ausbildung zur Bereitstellung einer durchgehenden Leitfähigkeit für elektrostatische Ladungen besteht darin, dass die Cap-Mischung eine andere Leitfähigkeit für elektrostatische Ladungen aufweist als die Base-Mischung und daß Vorschub und Überlappung der zuerst aufgebrachten Base-Mischung in den Bereichen, in denen während der nachfolgenden Vulkanisation die Umfangsrillen eingedrückt werden, so eingestellt wird, daß eine Verdickung der Base-Mischung im wesentlichen bis auf die Gesamtschichtdicke des Laufstreifens erreicht wird, während beim nachfolgenden Aufspulen der Cap-Mischung Vorschub und Überlappung in den die während der nachfolgenden Vulkanisation eingebrachten Umfangsrillen enthaltenen Bereichen so eingestellt wird, dass eine Verdünnung oder Unterbrechung der Decklage (Cap) entsteht. Hierdurch erzeugt man im Bereich der späteren Umfangsrillen eine in radialer Richtung nahezu durchgehende Base-Schicht, während in den benachbarten Bereichen im wesentlichen die Cap-Schicht, die besonderen Anforderungen hinsichtlich des Abriebs und des Naßgriffsverhaltens genügen soll, in entsprechender Dicke über der Base-Schicht aufgelegt wird.

Eine Energieeinsparung im Fertigungsprozeß ergibt sich dann, wenn nach dem Aufspulen von Seitenstreifen und/oder Laufstreifen der in diesem Bereichen noch fertigungswarme Rohling in einer Form vulkanisiert wird. Hierdurch entfällt das sonst üblicherweise nötige Aufheizen oder Vorwärmen.

Selbstverständlich ist eine Variation der Schichtdicken für Seitenwände und Laufstreifen jederzeit durch Änderung der Steigung, der Überlappung oder des Vorschubes der aufgespulten Gummistreifen möglich, so dass hier leicht eine fachmännische Anpassung erfolgen kann.

Anhand eines Ausführungsbeispiels soll die Erfindung näher dargestellt werden.

Es zeigen:
- Fig. 1a: eine zum Aufspulen des Seitenwandgummis auf eine bereits in ihrer endgültigen Kontur hergestellte und mindestens teilweise vulkanisierte Karkasse geeignete Vorrichtung als Prinzipskizze in der Seitenansicht
- Fig. 1b: die in der Figur 1a dargestellte Vorrichtung in der Draufsicht
- Fig. 2a, 2b: das Prinzip des in den Fig. 1a und 1b dargestellten Verfahrens in zwei Ansichten
- Fig. 3a: eine zum Aufspulen des Seitenwandgummis und des Gummistreifens für den Laufstreifen auf eine bereits bombierte und mit Gürtellagen versehene Karkasse geeignete Vorrichtung
- Fig. 3b: die in der Fig. 3a dargestellte Vorrichtung in der Draufsicht
- Fig. 4: eine Prinzipskizze zu dem in den Fig. 3a und 3b dargestellten Verfahren.

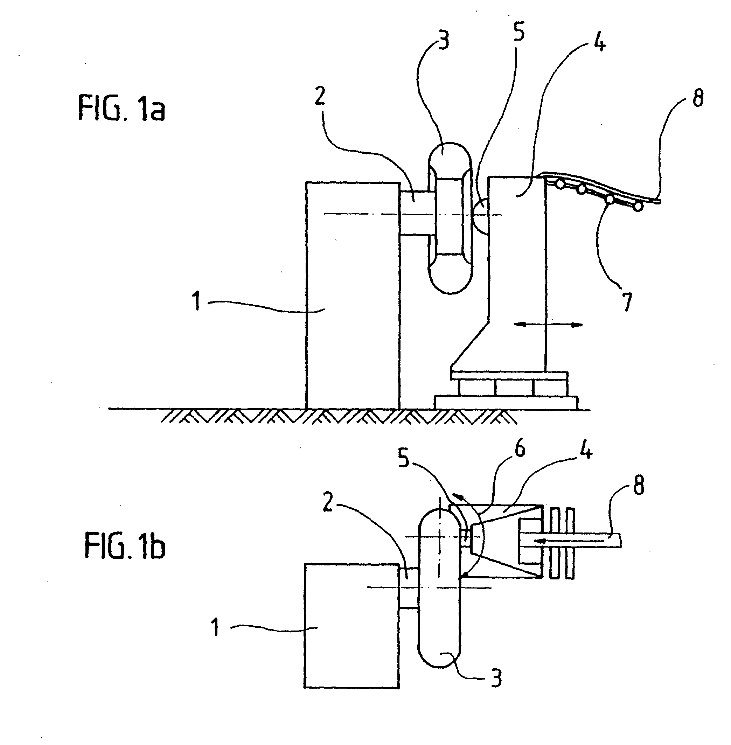

Die Figur 1a zeigt eine Drehvorrichtung 1 mit einem Spannkopf 2, auf dem über eine nicht näher dargestellte Spreizfelge eine mindestens teilweise vulkanisierte Karkasse 3 drehbar aufgespannt ist.

Ein auf einer Ständerkonstruktion translatorisch zum Spannkopf in mindestens zwei Achsen verfahrbarer Kleinkalander 4 steht mit seinem zur Anlage des Seitenstreifens ausgelegten Rollenkopf bzw. Rollensystem 5 in Auflageposition für einen Seitenstreifen. Der Rollenkopf 5 ist hierbei über ein Bogensegment 6 schwenkbar angeordnet, um der gewölbten Außenkontur der Seitenwände der Karkasse folgen zu können.

Auf dem an der Rückseite des Kleinkalanders 4 angeordneten Zufuhrrollgang 7 erfolgt die Kautschukzufuhr in Form z. B. einer aus einem hier nicht näher dargestellten Extruder zugeführten Kautschukrundschnur 8. Die Formung der Kautschukrundschnur zur gewünschten Form des Gummistreifens 8a für das Seitenwandgummi erfolgt im Rollkopf 5.

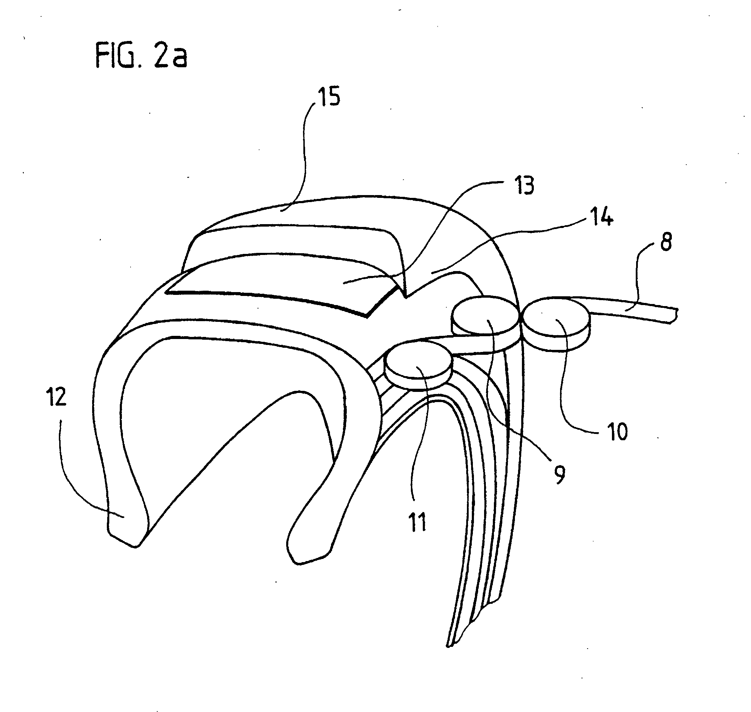

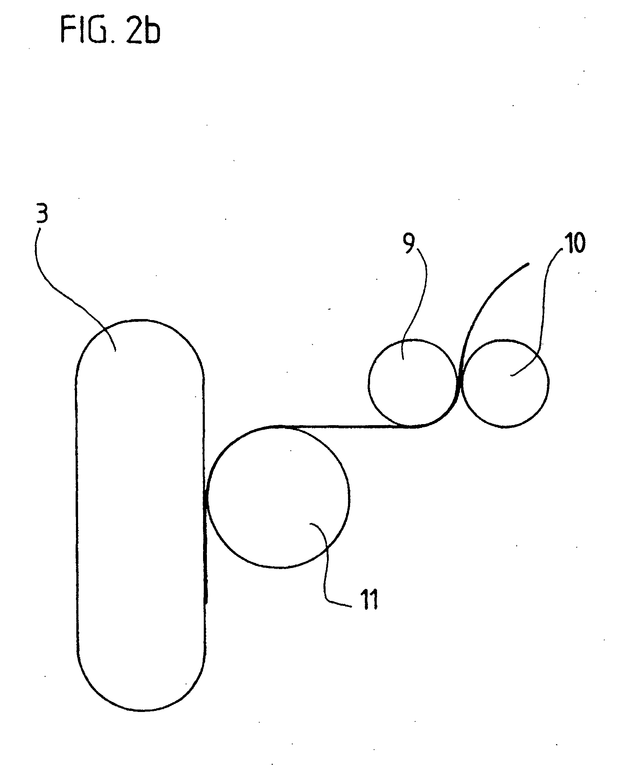

Wie in den Figuren 2a und 2b ersichtlich, besteht der Rollkopf 5 im wesentlichen aus den Profilwalzen 9 und 10, die aus der Kautschukrundschnur ein zur spiralförmigen Auflage des Gummistreifens geeignetes Profil formen und aus der Andruckrolle 11, die mit der nötigen Druckkraft zur Auflage des geformten Gummistreifens der rotierenden Karkasse 3 zugestellt wird.

Während der üblicherweise im Wulstbereich 12 beginnende Auflagevorgang in Richtung auf die Gürtellagen 13 der Karkasse fortschreitet, erfolgt neben der Höhenverstellung des Rollkopfes auch dessen Schwenkung auf dem Bogensegment 6, so daß eine gleichmäßige Auflage des extrudierten und geformten Gummistreifens entweder nebeneinanderliegend oder überlappend bis in den Schulterbereich 14 der Reifenkarkasse erfolgen kann. Je nach Verfahrensweise können hier die Schulterbereiche eines in diesem Falle bereits aufgelegten Laufstreifens 15 überlappend mit angerollt werden, so daß direkt nach der Auflage der Gummistreifen für die Seitenwände der nun komplett zusammengestellte Karkasskörper der weiteren Vulkanisation zugeführt werden kann.

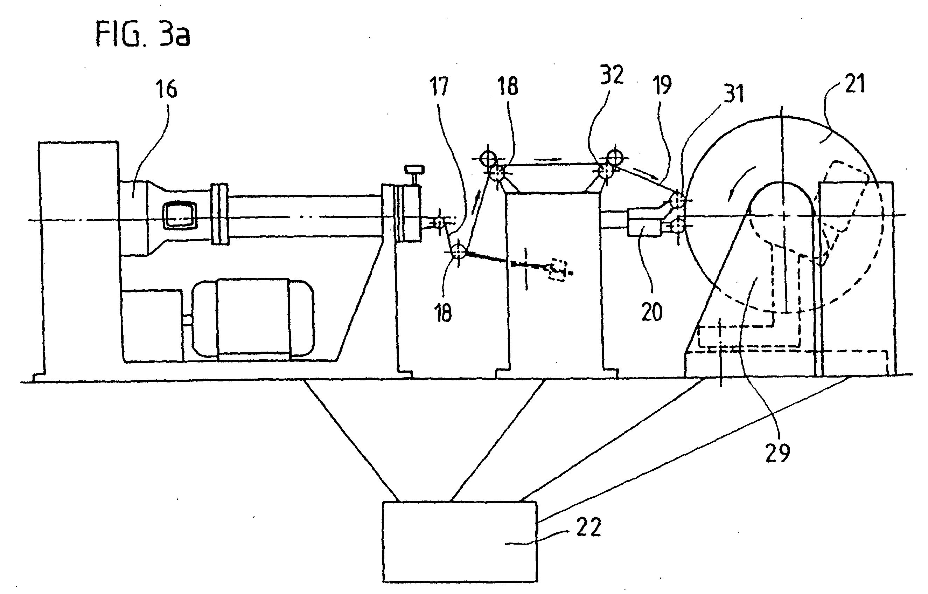

Die Fig. 3a zeigt eine Vorrichtung, bei der das Seitenwandgummi des Reifens als extrudierter Gummistreifen in Form einer Spirale mit mehreren nebeneinander liegenden oder sich mindestens teilweise übertappenden Windungen auf die Seitenwände einer bereits bombierten und mit den Gürtellagen versehenen Karkasse aufgespult wird, wobei gleichzeitig der Laufstreifen als extrudierter Gummistreifen schraubenförmig mit überlappenden Wicklungen auf die Umfangsfläche des Gürtelpaketes aufgespult wird.

In der Fig. 3a erkennt man hierzu einen Extruder 16, aus dem ein Materialstreifen 17 gefördert wird, der aufgrund des Extruderrnundstücks einen runden Querschnitt aufweist. Dieser Rundschnurmaterialstreifen 17 besteht aus einer für den Laufstreifen angepaßten Kautschukmischung. Über Umlenkrollen 18 und über weiter nicht näher dargestellte Walzen wird der extrudierte Rundschnurmaterialstreifen in eine flache Rechteckquerschnittsform überführt und wird als Rechteckstreifen 19 über einen Auflagekopf 20 auf den aus bereits bombierter und mit den Gürtellagen versehener Karkasse bestehenden Reifenrohling 21 überlappend aufgelegt.

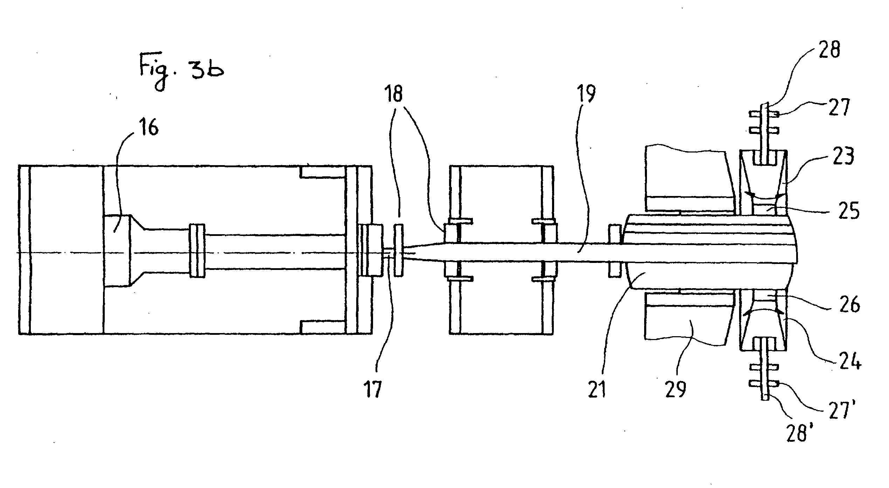

In der Zusammenschau mit der Fig. 3b, in der die in der Fig. 3a gezeigte Vorrichtung in der Draufsicht dargestellt ist, erkennt man zwei Kleinkalander 23 und 24 mit den zugehörigen Rollenköpfen 25 und 26, mit dem - ebenso wie in den Fig. 2a und 2b dargestellt - die Seitenwände des Reifenrohlings 21 mit einem Gummistreifen für das Seitenwandgummi belegt werden. Auch hier sind die Rollenköpfe schwenkbar angeordnet, um der gewölbten Außenkontur der Seitenwände der Karkasse folgen zu können. Die Kautschukzufuhr erfolgt auch hier über Zufuhrrollgänge 27 und 27' in Form einer aus einem hier nicht näher dargestellten Extruder zugeführten Kautschukrundschnur 28 und 28'.

Der Reifenrohling wird hierbei auf einer mit einer drehbaren Aufbautrommel versehenen Aufbaueinheit 29 über einen mit Druckluft beaufschlagbaren Innenbalg bombiert und gespannt.

Die computergestützte Steuereinheit 22 verbindet und steuert abhängig vom Extruder 16 bzw. abhängig von den die Kautschukrundschnur 28 (28') bereitstellenden Extrudern sämtliche Aggregate zur Auflage der Materialstreifen.

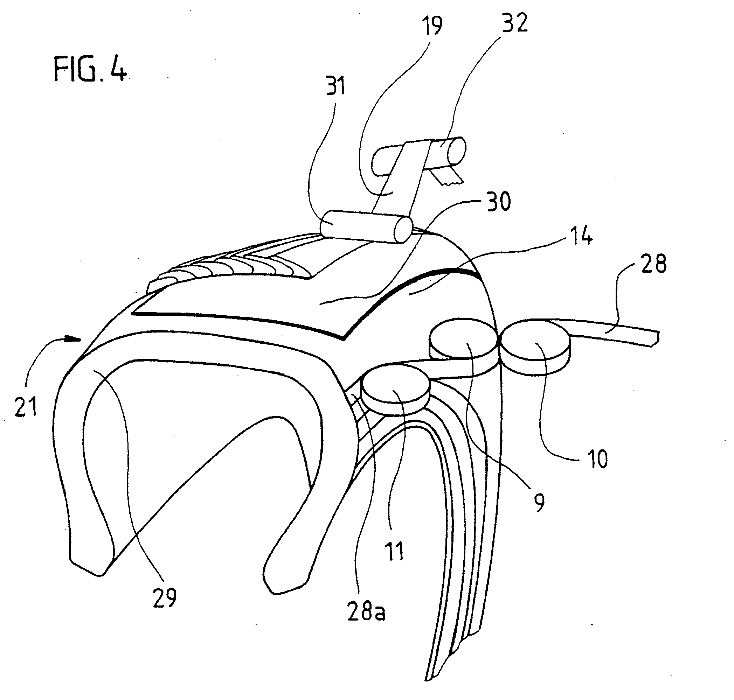

Die Fig. 4 zeigt das in den Figuren 3a und 3b dargestellte Verfahren noch einmal als Prinzipskizze.

Man erkennt hier den über einen nicht näher dargestellten aufblasbaren Balg bombierten Reifenrohling 21, der aus dem bombierten Karkasskörper 29 und den bereits aufgelegten Gürtellagen 30 besteht.

Im wesentlichen zeitgleich mit der Auflage des geformten Gummistreifens 28a für das Seitenwandgummi durch die in den Rollenköpfen 25 und 26 vorhandenen Profil- und Andruckrollen 9, 10 und 11 erfolgt auch die Auflage des Laufstreifens in Form eines extrudierten und geformten Gummistreifens 19 schraubenförmig mit teilweise sich überlappenden Wicklungen auf die Umfangsfläche des Gürtelpaketes 30 über die im Auflagekopf 20 für den Gummistreifen des Laufstreifens angeordneten Auflage- und Umlenkrollen 31 und 32.

Die Auflage von Gummistreifen für Laufstreifen und Seitenwand auf eine bereits bombierte Karkasse verhindert das Einbringen von größeren Verformungen in die aufzulegenden Gummimaterialien, so daß das Seitenwand- und das Laufstreifengummi ohne Jegliche Vorspannungen und ohne Unstetigkeiten in der Kontur in beliebigen Schichtdicken aufgebracht werden können.

### Bezugszeichenliste

- 1: Drehvorrichtung
- 2: Spannkopf
- 3: Karkasse
- 4: Kleinkalander
- 5: Rollenkopf
- 6: Bogensegment

- 7: Zufuhr-Rollgang
- 8: Kautschukrundschnur
- 8a: Gummistreifen für das Seitenwandgummi
- 9, 10: Profilwalze
- 11: Andruckrolle
- 12: Wulstbereich
- 13: Gürtellagen
- 14: Schulterbereich
- 15: Laufstreifen
- 16: Extruder
- 17: Materialstreifen für den Laufstreifen
- 18: Umlenkrolle
- 19: rechteckiger Materialstreifen
- 20: Auflagekopf
- 21: Reifenrohling
- 22: Steuereinheit
- 23, 24: Kleinkalander
- 25, 26: Rollenkopf
- 27, 27': Zufuhrrollgang
- 28, 28': Kautschukrundschnur
- 28 a: Gummistreifen für das Seitenwandgummi
- 29: bombierter Karkasskörper
- 30: Gürtellagen
- 31, 32: Auflagerolle/Umlenkrolle

## Patentansprüche

1. Verfahren zur Herstellung eines Reifens, insbesondere zur Herstellung eines Luftreifens für Kraftfahrzeuge, wobei das Verfahren einen schrittweisen Aufbau des Reifens mit einer möglichst weitgehend luftundurchlässigen Schicht, zumindest einer Karkassenlage, Hornprofilen, Wulstkernen, Seitenwänden sowie mit einem aus Gürtelverband, ggf. einer ein- oder mehrteiligen Gürtelbandage und einer Laufstreifenunterplatte bestehenden Gürtelpaket umfasst, wobei das Seitenwandgummi als extrudierter Gummistreifen in Form einer Spirale mit mehreren nebeneinanderliegenden oder sich mindestens teilweise überlappenden Windungen auf die Seitenwände der Karkasse aufgespult wird,
**dadurch gekennzeichnet,**
**dass** der die Seitenwände bildende Gummistreifen (18, 8a, 28, 28a) bei bereits und bei noch bombierter Karkasse (3,29) aufgespult wird

2. Verfahren nach Anspruch 1, **dadurch gekennzeichnet, dass** der Laufstreifen (15) auf dem Gürtelpaket vor dem oder während des Aufspulen(s) der Seitenwände aufgebracht wird.

3. Verfahren nach Anspruch 1 oder 2, **dadurch gekennzeichnet, daß** der Laufstreifen als extrudierter Gummistreifen entweder als ein im wesentlichen der Laufstreifenbreite entsprechender Einzelstreifen oder schraubenförmig mit nebeneinanderliegenden oder sich teilweise überlappenden Wicklungen auf die Umfangsfläche des Gürtelpaketes aufgespult wird.

4. Verfahren nach Anspruch 2 oder 3, **dadurch gekennzeichnet, daß** zeitgleich mit dem Aufspulen des Seitenwandgummis der Laufstreifen aufgebracht wird und die Extrusionsgeschwindigkeit, der Vorschub und das Extrusionsvolumen der Gummistreifen für die Seitenwände beim Aufspulen so gesteuert werden, das die Taktzeiten für das Aufbringen der Gummistreifen für die Seitenwände und für das Aufbringen des Laufstreifens annähernd gleich sind.

5. Verfahren nach Anspruch 3 oder 4, **dadurch gekennzeichnet, daß** der Seitenwand- und der Laufstreifen durch Koextrusion mit einer einzigen Extrudiervorrichtung aufgebracht werden.

6. Verfahren nach Anspruch 1 bis 5, **dadurch gekennzeichnet, daß** das Seitenwandgummi des Reifens als extrudierter Gummistreifen in Form einer Spirale mit mehreren nebeneinanderliegenden oder sich mindestens teilweise überlappenden Windungen auf die Seitenwände einer bereits in ihrer endgültigen Kontur hergestellten und mindestens teilweise vulkanisierten Karkasse aufgespult und der Reifen nach Aufbringen des Laufstreifens ausvulkanisiert wird.

7. Verfahren nach Anspruch 1 bis 6, **dadurch gekennzeichnet, daß** der durch die Extruderdüse vorbestimmte Austrittsquerschnitt der Gummistreifen durch einen oder meherere Profilwalzensätze mit einem zum Austrittsquerschnitt unterschiedlichen Querschnitt geformt und die so geformten Gummistreifen über ein abrollendes Auflegerad auf den Laufstreifenunterbau und /oder die Seitenwände der Karkasse aufgespult werden.

8. Verfahren nach Anspruch 1 bis 7, **dadurch gekennzeichnet, daß** der Laufstreifen und oder der Seitenstreifen je durch zwei oder mehr extrudierte Gummistreifen unterschiedlicher Mischung sukzessive oder durch Koextrusion aufgespult werden.

9. Verfahren nach Anspruch 1 bis 8, **dadurch gekennzeichnet, daß** die gewölbte Kontur der Seitenwände der Karkasse zum und während des Aufspulen(s) des Gummistreifens mindestens teilweise in eine einer im wesentlichen ebenen Scheibe entsprechenden Form flachgedrückt werden.

10. Verfahren nach Anspruch 3 bis 9, **dadurch gekennzeichnet, daß** der Laufstreifen durch Aufspulen zweier Gummistreifen mit unterschiedlichen Extrudern aufgebracht wird, wobei ein erster Extruder mit der Base-Mischung den Spulvorgang in einem Schulterbereich beginnt und ein zweiter Extruder mit der Cap-Mischung mit zur Mitte des Reifens versetztem Anfangs-Auflagepunkt nachläuft.

11. Verfahren nach Anspruch 10, **dadurch gekennzeichnet, daß** die Cap-Mischung eine andere Leitfähigkeit für elektrostatische Ladungen aufweist als die Base-Mischung und daß nach dem Aufspulen der Cap-Mischung in den die während der nachfolgenden Vulkanisation eingebrachten Umfangsrillen enthaltenden Bereichen eine weitere dünne Lage der Base-Mischung aufgelegt wird.

12. Verfahren nach Anspruch 10, **dadurch gekennzeichnet, dass** die Cap-Mischung eine andere Leitfähigkeit für elektrostatische Ladungen aufweist als die Base-Mischung und dass Vorschub und Überlappung der zuerst aufgebrachten Base-Mischung in den die während der nachfolgenden Vulkanisation eingebrachten Umfangsrillen enthaltenden Bereichen so eingestellt wird, dass eine Verdickung der Base-Mischung im wesentlichen bis auf die Gesamtschichtdicke des Laufstreifens erreicht wird, während beim nachlaufenden Aufspulen der Cap-Mischung Vorschub und Überlappung in den die während der nachfolgenden Vulkanisation eingebrachten Umfangsrillen enthaltenden Bereichen so eingestellt wird, daß eine Verdünnung oder Unterbrechungen der Decklage (Cap) entsteht.

## Claims

1. Method of producing a tyre, more especially a method of producing a pneumatic tyre for automotive vehicles, the method including a stepwise construction of the tyre with a layer which is as impermeable to air as possible, at least one carcase ply, hom profiles, bead cores, sidewalls and a belt bundle which comprises a belt binding, possibly a one-part or multi-part belt bandage, and a tread strip sub-structure, the sidewall rubber being wound onto the sidewalls of the carcase as an extruded strip in the form of a spiral having a plurality of windings which lie adjacent one another or at least partially overlap one another, **characterised in that** the rubber strip (18, 8a, 28, 28a), forming the sidewalls, is wound-on when the carcase (3, 29) has already been cambered or still needs to be cambered.

2. Method according to claim 1, **characterised in that** the tread strip (15) is applied to the belt bundle prior to, or during, the winding-on of the sidewalls.

3. Method according to claim 1 or 2, **characterised in that** the tread strip, as an extruded rubber strip, is wound onto the circumferential face of the belt bundle either as a single strip, which substantially corresponds to the tread strip width, or helically with windings which lie adjacent one another or at least partially overlap one another.

4. Method according to claim 2 or 3, **characterised in that** the tread strip is applied simultaneously with the winding-on of the sidewall rubber, and the extrusion speed, the advancement and the extrusion volume of the rubber strips for the sidewalls during the winding-on process are so controlled that the cycle times for applying the rubber strips for the sidewalls and for applying the tread strip are approximately identical.

5. Method according to claim 3 or 4, **characterised in that** the sidewall strip and the tread strip are applied by co-extrusion with a single extrusion apparatus.

6. Method according to claims 1 to 5, **characterised in that** the sidewall rubber of the tyre is wound onto the sidewalls of a carcase, which has already been produced in its definitive contour and is at least partially vulcanised, as an extruded rubber strip in the form of a spiral having a plurality of windings which lie adjacent one another or at least partially overlap one another, and the tyre is fully vulcanised after the tread strip has been applied.

7. Method according to claims 1 to 6, **characterised in that** the exit cross-section of the rubber strips, which is predetermined by the extruder nozzle, is shaped by one or more sets of profile rollers having a cross-section which differs from the exit cross-section, and the rubber strips, thus shaped, are wound onto the tread strip sub-structure and/or the sidewalls of the carcase via a rolling applicator wheel.

8. Method according to claims 1 to 7, **characterised in that** the tread strip and/or the sidewall strip are or is respectively wound-on by two or more extruded rubber strips of a different mixture successively or by co-extrusion.

9. Method according to claims 1 to 8, **characterised in that** the curved contour of the sidewalls of the carcase, at and during the winding-on of the rubber strip, is at least partially pressed flat into a shape corresponding to a substantially flat disc.

10. Method according to claims 3 to 9, **characterised in that** the tread strip is applied by winding-on two rubber strips with different extruders, a first extruder with the base mixture beginning the winding process in a shoulder region, and a second extruder with the cap mixture following with an initial supporting point offset from the centre of the tyre.

11. Method according to claim 10, **characterised in that** the cap mixture has a conductivity for electrostatic charges which is different from that of the base mixture, and **in that**, after the winding-on of the cap mixture, an additional thin layer of the base mixture is applied in the regions containing the circumferential grooves introduced during the subsequent vulcanisation.

12. Method according to claim 10, **characterised in that** the cap mixture has a conductivity for electrostatic charges which is different from that of the base mixture, and **in that** the advancement and overlapping of the initially applied base mixture in the regions containing the circumferential grooves introduced during the subsequent vulcanisation, are so set that a thickening of the base mixture substantially to the total layer thickness of the tread strip is achieved while, during the following winding-on of the cap mixture, the advancement and overlapping in the regions containing the circumferential grooves introduced during the subsequent vulcanisation, are so set that a thinning of, or interruptions in, the cover ply (cap) is or are produced.

## Revendications

1. Procédé de fabrication d'un pneumatique, en particulier concernant la fabrication d'un pneumatique pour des véhicules automobiles, où le procédé comprend une structure du pneumatique, produite par étapes, comprenant une couche le plus largement possible imperméable à l'air, au moins une nappe de carcasse, des sculptures des rebords, des tringles, des flancs, ainsi qu'un paquet de ceinture se composant d'un assemblage de ceinture, le cas échéant d'un bandage de ceinture constitué d'une ou de plusieurs parties, et d'une plaque sous-jacente de la bande de roulement, où le caoutchouc des flancs se présentant comme une bande de caoutchouc extrudée est enroulé, sous la forme d'une spirale, sur les flancs de la carcasse en formant plusieurs enroulements placés les uns à côté des autres ou se chevauchant au moins partiellement,
**caractérisé**
**en ce que** la bande de caoutchouc (18, 8a, 28, 28a) formant les flancs est enroulée lorsque la carcasse (3, 29) est déjà bombée.

2. Procédé selon la revendication 1, **caractérisé en ce que** la bande de roulement (15) est appliquée sur le paquet de ceinture, avant ou au cours de l'enroulement du caoutchouc des flancs.

3. Procédé selon la revendication 1 ou 2, **caractérisé en ce que** la bande de roulement se présentant comme une bande de caoutchouc extrudée est enroulée soit comme une bande unique correspondant pratiquement à la largeur de la bande de roulement, soit en formant des enroulements, en forme de spirale, placés les uns à côté des autres ou se chevauchant partiellement sur la surface périphérique du paquet de ceinture.

4. Procédé selon la revendication 2 ou 3, **caractérisé en ce que** la bande de roulement est appliquée en même temps que l'enroulement du caoutchouc des flancs, et la vitesse d'extrusion, l'avance et le volume d'extrusion des bandes de caoutchouc pour les flancs sont réglés, lors de l'enroulement, de manière telle que les temps de cycles sont presque les mêmes pour l'application des bandes de caoutchouc pour les flancs et pour l'application de la bande de roulement.

5. Procédé selon la revendication 3 ou 4, **caractérisé en ce que** la bande des flancs et la bande de roulement sont appliquées par coextrusion, en utilisant un seul dispositif d'extrusion.

6. Procédé selon l'une quelconque des revendications 1 à 5, **caractérisé en ce que** le caoutchouc des flancs du pneumatique, se présentant comme une bande de caoutchouc extrudée, est enroulé en formant plusieurs enroulements, en forme de spirale, placés les uns à côté des autres ou se chevauchant au moins partiellement, sur les flancs d'une carcasse fabriquée déjà dans son contour définitif et au moins partiellement vulcanisée, et le pneumatique est vulcanisé après l'application de la bande de roulement.

7. Procédé selon l'une quelconque des revendications 1 à 6, **caractérisé en ce que** la section de sortie des bandes de caoutchouc, prédéterminée par la filière d'extrudeuse, est formée par un ou plusieurs ensembles de rouleaux à profiler ayant une section différente de la section de sortie, et les bandes de caoutchouc ainsi formées sont enroulées, au moyen d'une roue d'alimentation en rotation, sur l'infrastructure de la bande de roulement et/ou sur les flancs de la carcasse.

8. Procédé selon l'une quelconque des revendications 1 à 7, **caractérisé en ce que** la bande de roulement et/ou la bande des flancs sont enroulées successivement ou par coextrusion, à chaque fois par deux - ou plus - bandes de caoutchouc extrudées d'un mélange différent.

9. Procédé selon l'une quelconque des revendications 1 à 8, **caractérisé en ce que** le contour bombé des flancs de la carcasse est aplati, par compression, pour l'enroulement et au cours de l'enroulement de la bande en caoutchouc, dans une forme correspondant au moins partiellement à un disque pratiquement plat.

10. Procédé selon l'une quelconque des revendications 3 à 9, **caractérisé en ce que** la bande de roulement est appliquée par enroulement de deux bandes de caoutchouc, en utilisant deux extrudeuses différentes, où une première extrudeuse commence, avec le mélange de base, le processus d'enroulement dans une zone d'épaulement, et une seconde extrudeuse, avec le mélange du sommet, passe après, en comportant un point d'application initial décalé par rapport au milieu du pneumatique.

11. Procédé selon la revendication 10, **caractérisé en ce que** le mélange du sommet comprend, pour des charges électrostatiques, une conductivité différente de celle du mélange de base, et **en ce que**, après l'application du mélange du sommet, une autre fine couche du mélange de base est appliquée dans les zones contenant les rainures périphériques formées au cours de la vulcanisation se produisant ensuite.

12. Procédé selon la revendication 10, **caractérisé en ce que** le mélange du sommet présente, pour des charges électrostatiques, une conductivité différente de celle du mélange de base, et **en ce que** l'avance et le chevauchement du mélange de base appliqué en premier dans les zones contenant les rainures périphériques formées au cours de la vulcanisation se produisant ensuite, sont réglés de manière telle, que l'on obtient un épaississement du mélange de base atteignant pratiquement l'épaisseur totale de la couche de la bande de roulement, tandis qu'au cours de l'enroulement du mélange du sommet se produisant après, l'avance et le chevauchement dans les zones contenant les rainures périphériques formées au cours de la vulcanisation qui suit, sont réglés de manière telle, qu'il se produit un amincissement ou des interruptions de la couche extérieure (sommet).
